# EUROPEAN PATENT APPLICATION

(11) **EP 3 854 471 A1**
(43) Date of publication of application: **28.07.2021**
(21) Application number: 20153353.6
(22) Date of filing: 23.01.2020
(51) Int. Cl.: B01D 53/26, B01D 53/06, B01J 20/22, C02F 1/28, E03B 3/28

(54) **IMPROVEMENTS RELATING TO WATER PURIFICATION**

(71) Applicant: Molecule RND Limited, Castleroy, Limerick (IE)
(72) Inventor: FRANCIS, Kurt, Limerick (IE)
(74) Representative: Appleyard Lees IP LLP

(57) **Abstract**

A method of obtaining water from a liquid composition comprising water, the method comprising:
(a) providing a sorbent material;
(b) contacting the sorbent material with the liquid composition comprising water;
(c) separating the sorbent material and the liquid composition comprising water; and
(d) desorbing water from the sorbent material;
wherein the sorbent material is a metal-organic material.

## Description

Freshwater is one of the Earth's most fundamental resources, with plants, animals and humans all needing freshwater for survival. Freshwater is also used heavily in agriculture and industrial processes. Water demand globally is projected to increase by 55% between 2000 and 2050. Much of this demand is driven by growing populations.

However supplies of freshwater are limited and many of the world's freshwater sources are being drained faster than they can be replenished. A significant majority of the water on Earth is salt water (otherwise known as saline water) and the remaining freshwater is often in the form of ice. This means that only a fraction of the water on Earth is available as fresh, liquid water suitable for human consumption. This supply of freshwater is not evenly distributed, and many of the Earth's most populated regions have a limited supply. The hazards posed by insufficient water supplies are particularly acute. A shortage of fresh water may lead to a variety of crises, such as famine, disease, death, forced mass migration, cross-region conflict/war, and collapsed ecosystems. Thus there is an increasing need for freshwater, particularly in populated regions.

Much of the existing technology in this field is focused on producing freshwater from seawater or to a lesser degree, brackish water (which is a combination of seawater and freshwater). In such processes, the concentration of dissolved salts and other contaminants is reduced to provide freshwater. However many of these existing purification and desalination processes require massive amounts of energy.

Reverse osmosis (RO) is currently the leading desalination technology. In basic RO processes, sea water is forced through a semipermeable membrane. The larger salt molecules are unable to pass through this membrane, while the smaller water molecules can. However RO is energy intensive, expensive and cannot be easily scaled down efficiently.

Other existing seawater desalination systems include thermal-energy-based multi-stage flash (MSF) distillation, and multi-effect distillation (MED), both of which are energy- and capital-intensive processes. Humidification-dehumidification (HDH) desalination systems have also been developed. However this system also makes use of high amounts of thermal energy. Modifications to these systems have resulted in a reduction of the cost of the devices; however, energy costs are still high.

It is thus desirable to provide low cost and low energy alternatives to current desalination processes that can be scaled up and down efficiently.

It is further desired to provide a process and/or device which requires less heat energy in use.

It is an aim of the present invention to provide improved means for obtaining water from liquid compositions comprising water, such as seawater and brackish water.

According to a first aspect of the present invention, there is provided a method of obtaining water from a liquid composition comprising water, the method comprising:
(a) providing a sorbent material;
(b) contacting the sorbent material with the liquid composition comprising water;
(c) separating the sorbent material and the liquid composition comprising water; and
(d) desorbing water from the sorbent material;
wherein the sorbent material is a metal-organic material.

According to a second aspect of the present invention, there is provided a device for obtaining water from a liquid composition comprising water, the device comprising:
a sorbent material movable between a first position and a second position;
wherein in the first position the sorbent material is contactable with the liquid composition comprising water and in the second position the sorbent material is located within a conduit.

The device of the second aspect comprises a sorbent material. Any suitable sorbent material may be used. Suitable sorbent materials are materials which selectively absorb or adsorb water molecules, for example from seawater, brackish water or other liquid compositions comprising water, for example contaminated freshwater sources. Suitable sorbent materials will be known to the person skilled in the art. Preferred sorbent materials for use herein have rapid sorption and desorption kinetics and low heats of adsorption.

Suitably the sorbent material reaches at least 50% of its sorbent maximum capacity within 15 minutes under ambient conditions of temperature and humidity (27 °C, 1 atm). Suitably the sorbent material reaches at least 80%, suitably 90%, of its maximum sorbent capacity within 30 minutes under ambient conditions of temperature and humidity. Suitably the sorbent material reaches its sorbent capacity within 40 minutes under ambient conditions of temperature and humidity.

Suitably the sorbent material reaches at least 50% of its sorbent maximum capacity within 5 minutes under ambient conditions of temperature and humidity (27 °C, 1 atm). Suitably the sorbent material reaches at least 80%, suitably 90%, of its maximum sorbent capacity within 10 minutes under ambient conditions of temperature and humidity. Suitably the sorbent material reaches its sorbent capacity within 10 minutes under ambient conditions of temperature and humidity.

Preferably the sorbent material used in the second aspect of the present invention is a metal-organic material.

Preferred features of the first and second aspects of the present invention will now be described. Any feature may apply to either aspect as appropriate.

The present invention relates to a method and a device for obtaining water from a liquid composition comprising water. Suitably obtaining water from a liquid composition comprising water involves removing water from the liquid composition comprising water. Thus the invention may provide a method of capturing or removing water from a liquid composition comprising water.

The liquid composition comprising water is suitably a complex liquid composition comprising water and one or more further components.

In some embodiments water is not the major component of the composition and may, for example, be present as an impurity. In such embodiments the method of the first aspect may be used to remove water, for example to create an anhydrous composition.

In preferred embodiments the liquid composition comprising water is an aqueous composition. The liquid composition comprising water may be an aqueous composition comprising dissolved salts, for example seawater or brackish water. Suitably the liquid composition comprising water comprises more than 1,000 ppm of dissolved salts, suitably more than 3,000 ppm dissolved salts or more than 5,000 ppm dissolved salts. Highly salted water may comprise from 10,000 ppm to 35,000 ppm dissolved salts. Sea and ocean water comprise approximately 35,000 ppm dissolved salts.

Unless otherwise stated, in this specification, all references to ppm are to parts per million by weight.

Suitably the liquid composition comprising water is highly salted water, for example seawater or ocean water.

Dissolved salt species present in sea and ocean water are well known to the skilled person and include, for example, potassium chloride, magnesium chloride, sodium chloride, calcium sulphate and calcium carbonate. The dissolved salt species are suitably present as dissolved ions. Other species may also be present in the sea or ocean water, for example inorganic carbon, bromide, boron, strontium and fluoride and various dissolved atmospheric gases, for example nitrogen, oxygen, argon and carbon dioxide.

In embodiments wherein the liquid composition comprising water is salt water, the present invention may involve a desalination process.

In some embodiments the liquid composition comprising water may comprise waste water or effluent water. This may include any water that has been affected by human use, including water used in industrial processes, in agriculture or in domestic use. Waste water or effluent water may comprise contaminants, for example heavy metals, hydrocarbons, organic matter or radioactive materials.

In embodiments in which the liquid composition comprising water is waste water or effluent water, the present invention may involve a purification process.

In some embodiments the liquid composition comprising water may be treated before use in the present invention. In preferred embodiments the liquid composition comprising water is not treated before use.

Suitably in the method of the first aspect, steps (a) to (d) are carried out sequentially.

Step (a) of the method of the first aspect of the present invention involves providing a sorbent material. The device of the second aspect comprises a sorbent material. Suitably the sorbent material selectively absorbs or adsorbs water molecules. Suitably other molecules do not enter or adhere or foul the pore or surface in a way that negatively impacts the water sorption functionality of the material.

The sorbent material used in the method of the first aspect is a metal-organic material. Preferably the sorbent material used in the device of the second aspect is a metal-organic material.

Metal-organic materials (or MOMs) is a term used to describe materials comprising metal moieties and organic ligands including a diverse group of discrete (e.g. metal-organic polyhedra, spheres or nanoballs, metal-organic polygons) or polymeric structures (e.g. porous coordination polymers (PCPs), metal-organic frameworks (MOFs) or hybrid inorganic-organic materials). Thus metal-organic materials encompass discrete as well as extended structures with periodicity in one, two, or three dimensions.

In some embodiments the present invention relates to metal-organic materials which can exist in a first state and a second state. The second state is able to retain a higher amount of water than the first state. This change in state occurs upon exposure to water and/or water vapour. The first state may be regarded as an empty state in which no water or very low levels of water are retained in the material. The second state may be regarded as a loaded state in which water is retained within the material.

The metal-organic materials of the present invention suitably comprise metal species and ligands. In some embodiments these may be linked in substantially two-dimensions with weaker forces between two-dimensional layers. In some embodiments the metal species and ligands are linked in three dimensions to provide a metal-organic framework material or MOF.

The term metal species as used herein may refer to a metal cation or metal cluster that serves as a node in a metal-organic species.

Some preferred metal species for use herein are d-block metals, for example transition metal species. These are suitably present as transition metal ions. Other metal species that may be useful herein are magnesium, calcium and aluminium.

In especially preferred embodiments the metal species is selected from copper, cobalt, nickel, iron, zinc, cadmium, zirconium, magnesium, calcium and aluminium.

Most preferably the metal species is selected from Cu²⁺, Co²⁺, Ni²⁺, Fe²⁺, Fe³⁺, Zn²⁺, Cd²⁺, Zr⁴⁺, Mg²⁺, Ca²⁺ and Al³⁺.

In some embodiments the metal-organic material may comprise a mixture of two or more metal species. In preferred embodiments all of the metal species in the metal-organic material are the same.

The metal-organic materials defined herein suitably comprise ligands. Unless otherwise specified we mean to refer to linker ligands which provide a link between two or more metal species.

Suitably the ligand is a multidentate ligand.

The metal-organic material may comprise a mixture of two or more different ligands. Preferably all of the ligands in the metal-organic material are the same.

In preferred embodiments the ligand is a bidentate ligand.

In especially preferred embodiments the ligand is an organic bidentate ligand.

Suitable organic bidentate ligands may be aliphatic or aromatic in character.

Bidentate ligands suitably include at least two donor atoms. These are atoms that are able to donate an electron pair to form a coordinate bond, suitably a coordinate covalent bond.

In the organic bidentate ligands used in the present invention, the two donor atoms may be selected from halogens, sulphur, oxygen and nitrogen. The two donor atoms may each be the same or different.

Suitably the donor atoms are selected from oxygen and nitrogen.

Preferred ligands for use herein are compounds including one or more nitrogen atoms and/or one or more carboxylic acid (COOH) groups. When incorporated into the metal-organic material carboxylic acid groups typically bind to a metal species as a carboxylate anion.

Preferred ligands for use herein are compounds including one or more aromatic nitrogen atoms and/or one or more carboxylic acid groups.

In some preferred embodiments the metal-organic material comprises an organic bidentate ligand having two donor nitrogen atoms. These may be referred to herein as bidentate nitrogen ligands.

Preferred bidentate nitrogen ligands comprise at least one nitrogen-containing heterocycle. In some embodiments the bidentate nitrogen ligand may be a nitrogen-containing heterocycle comprising two nitrogen atoms each having a lone pair of electrons, for example pyrazine. The bidentate ligand may comprise multiple aromatic rings including multiple nitrogen containing aromatic heterocycles, which may contain one or more nitrogen atoms and optionally one or more further heteroatoms. For example these may include aromatic moieties based on pyridine, pyrazine, imidazole, pyrimidine, pyrrole, pyrazole, isoxazole and oxazole. Also suitable are compounds based on bicyclic aromatic heterocycles, for example indole, purine, isoindole, pteridine, quinoline, benzotriazole and isoquinoline.

Nitrogen containing aromatic heterocyclic ligands may be incorporated into the metal-organic material in protonated or deprotonated form.

In some embodiments the bidentate nitrogen ligand comprises two nitrogen-containing heterocycles, which may be linked by a bond. One such preferred bidentate ligand is 4,4'-bipyridine (L1):

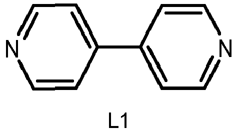

Alternatively, the two nitrogen-containing heterocycles may be linked together by a spacer group. Suitably the bidentate nitrogen ligand has the formula (L2N): 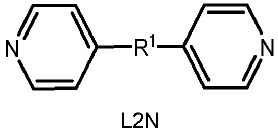
wherein R¹ is an optionally substituted spacer group.
R¹ may be a heteroatom, a group of connected heteroatoms or a group comprising heteroatoms. For example R¹ may be a -N=N- group.
R¹ may be a hydrocarbyl group. The hydrocarbyl group may comprise a cyclic group. The hydrocarbyl group may comprise an aromatic cyclic group. The hydrocarbyl group may comprise a heterocyclic group.

As used herein, the term "hydrocarbyl" is used in its ordinary sense, which is well-known to those skilled in the art. Specifically, it refers to a group having predominantly hydrocarbon character. Examples of hydrocarbyl groups include:
(i) hydrocarbon groups, that is, aliphatic (which may be saturated or unsaturated, linear or branched, e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);
(ii) substituted hydrocarbon groups, that is, substituents containing non-hydrocarbon groups which, in the context of this invention, do not alter the predominantly hydrocarbon nature of the substituent (e.g., halo (especially chloro and fluoro), hydroxy, alkoxy, keto, acyl, cyano, mercapto, alkylmercapto, amino, alkylamino, nitro, nitroso, and sulphoxy);
(iii) hetero substituents, that is, substituents which, while having a predominantly hydrocarbon character, in the context of this invention, contain other than carbon in a ring or chain otherwise composed of carbon atoms. Heteroatoms include sulphur, oxygen, nitrogen and encompass substituents such as pyridyl, furyl, thienyl and imidazolyl.

Suitable bidentate nitrogen ligands for use herein include compounds L1 to L68:

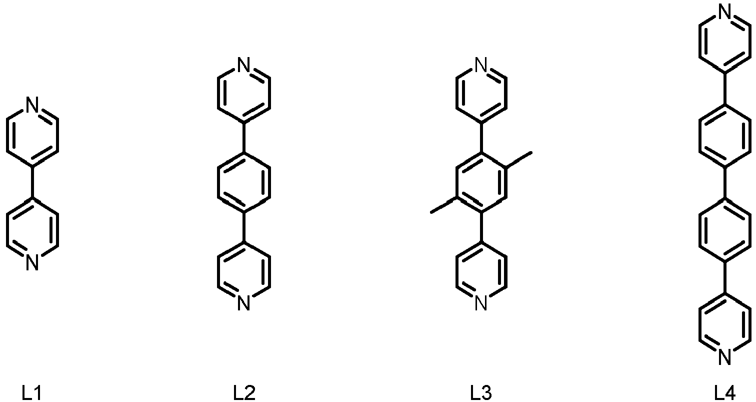

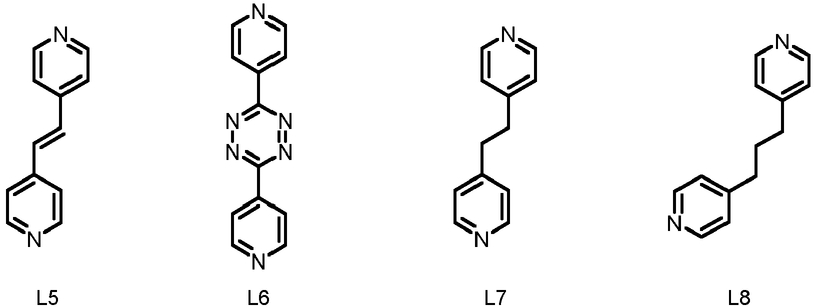

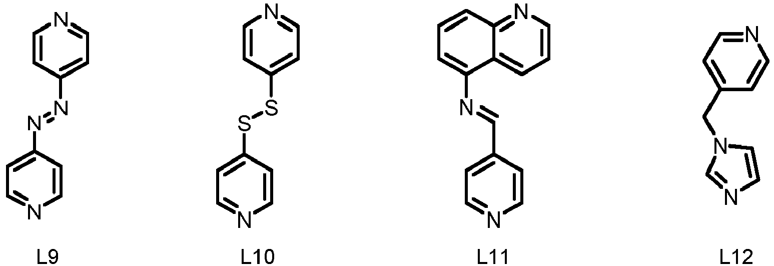

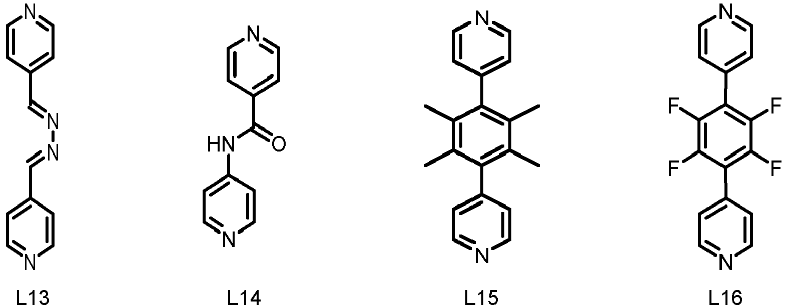

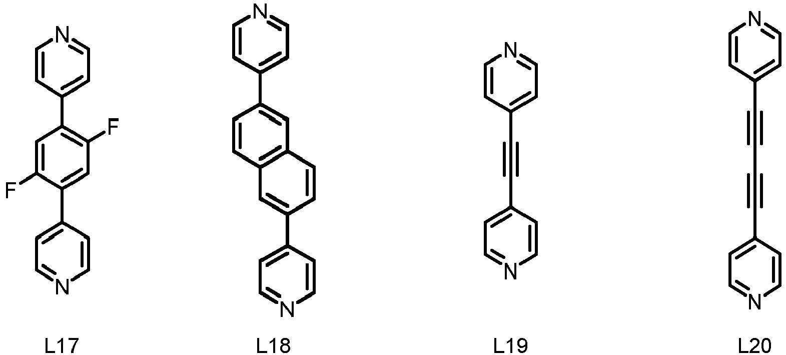

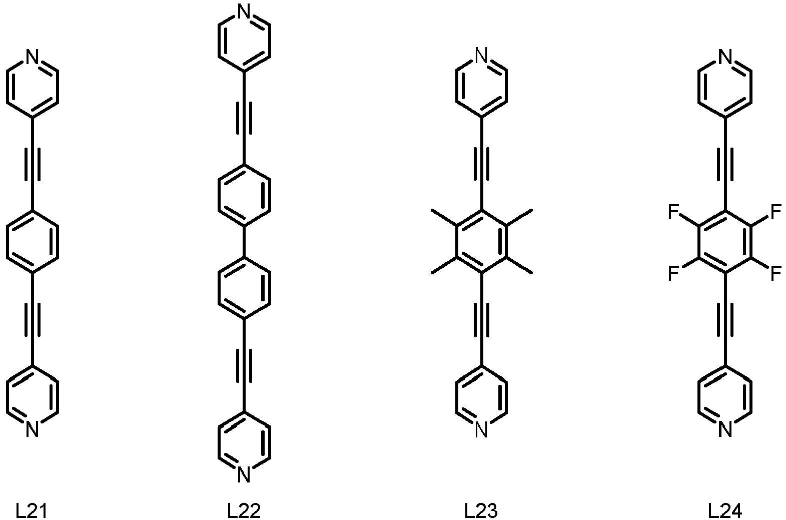

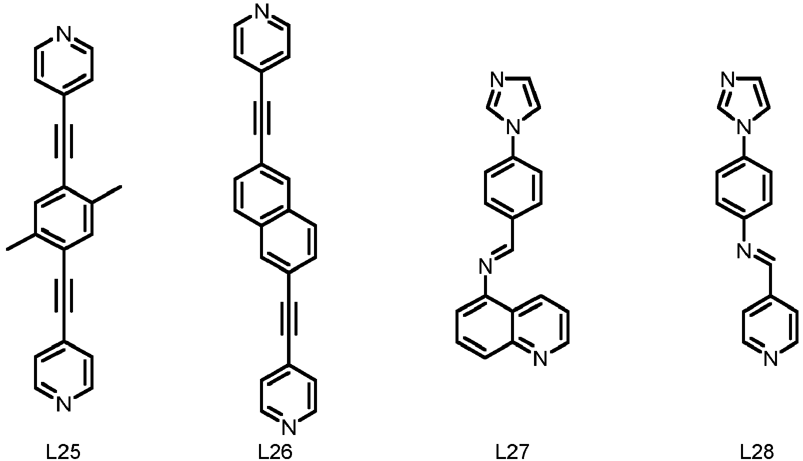

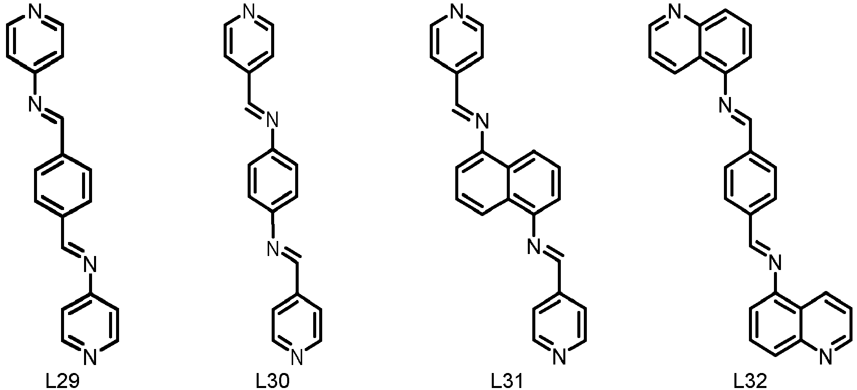

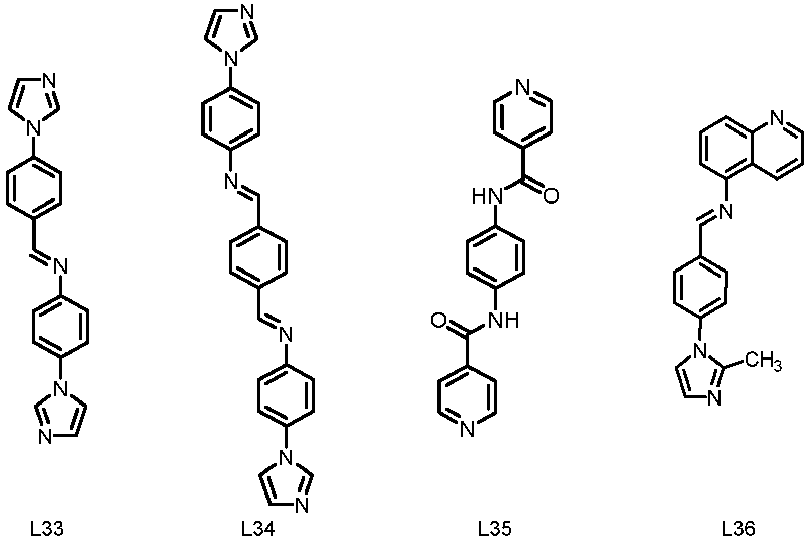

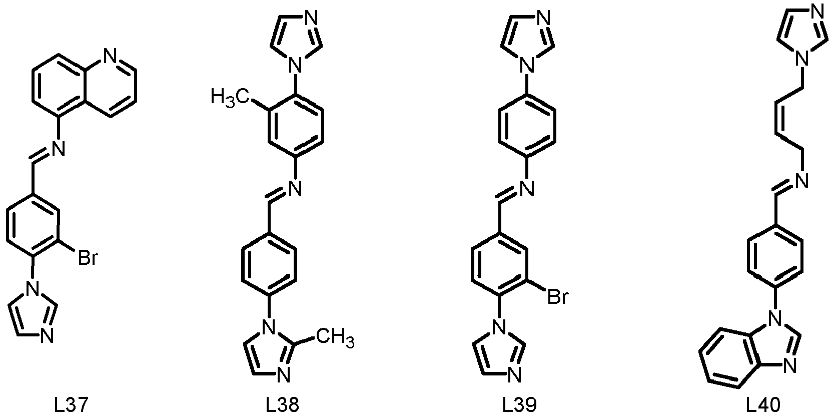

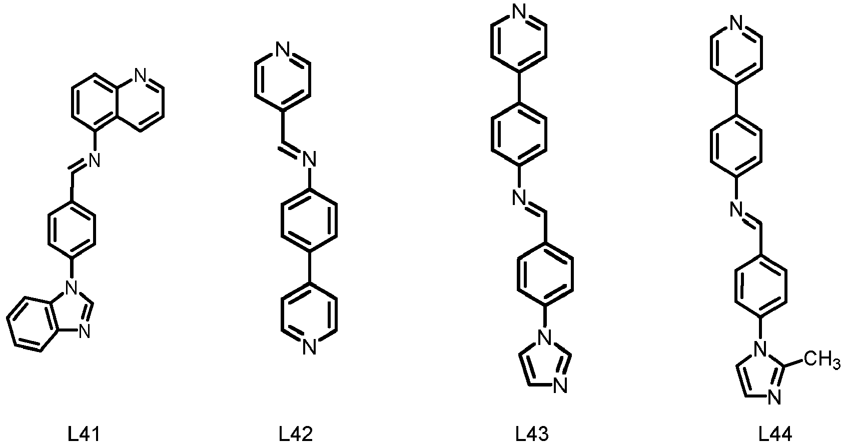

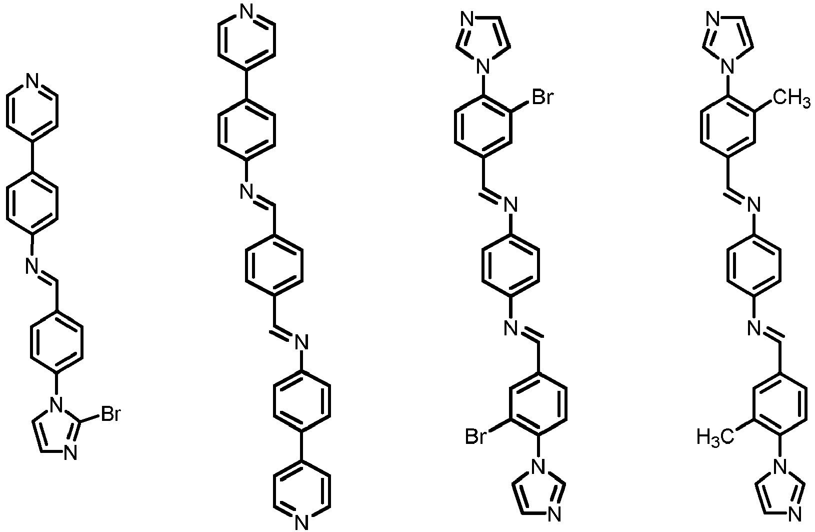

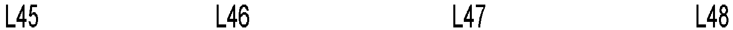

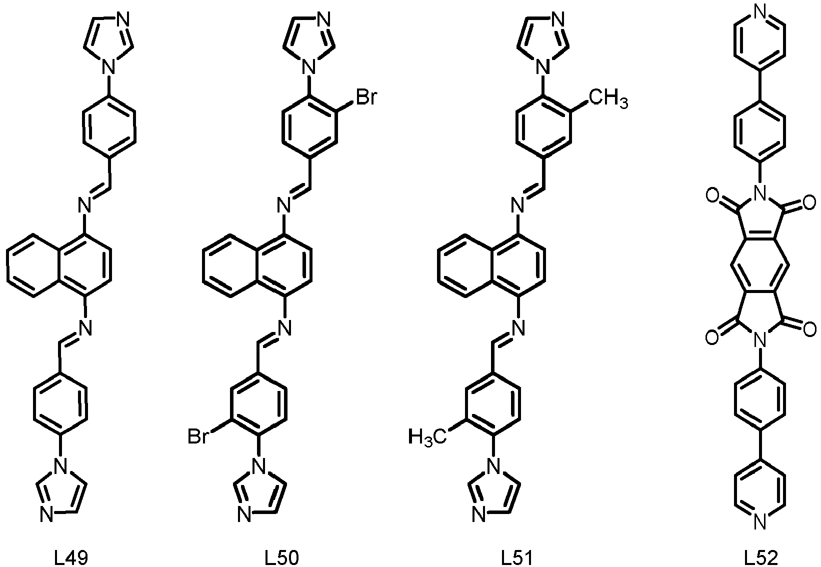

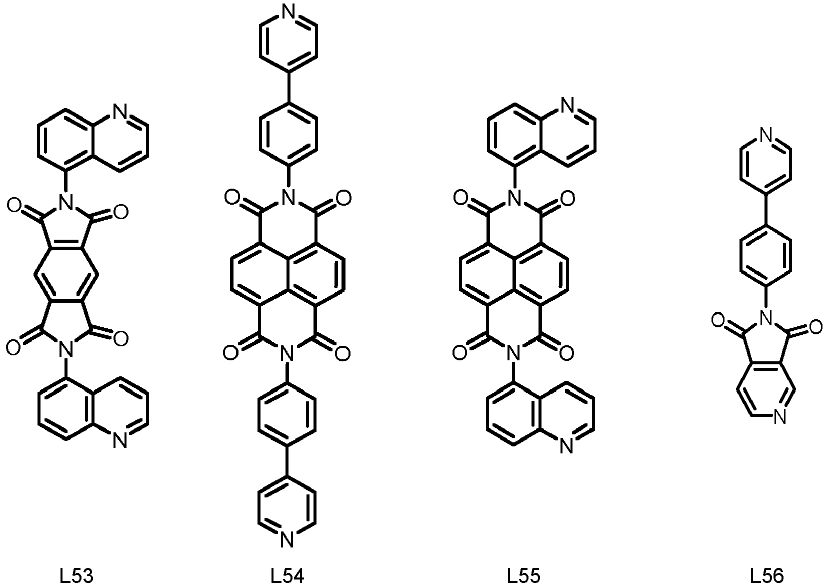

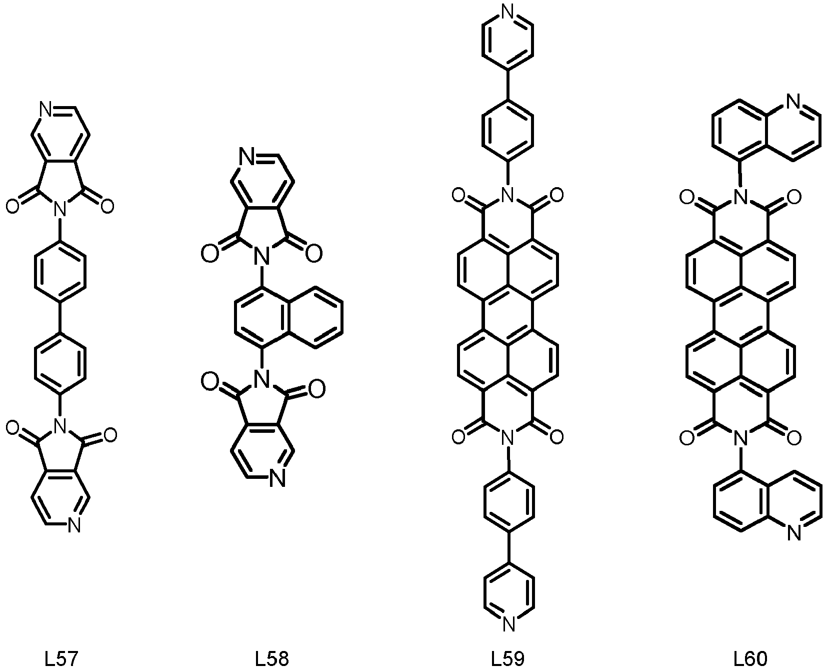

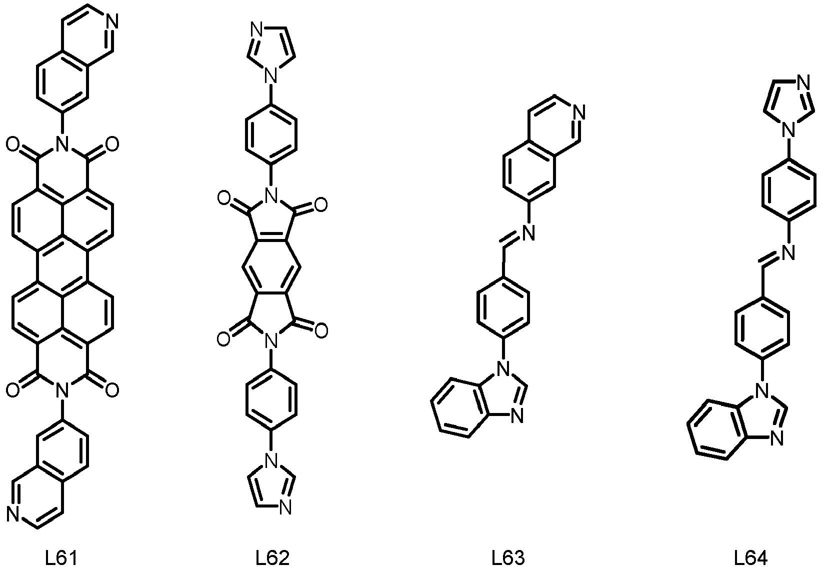

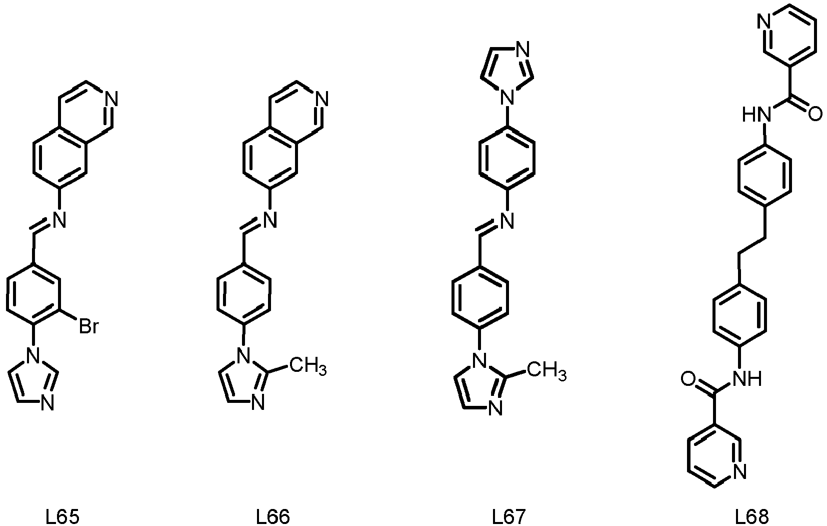

Preferred bidentate ligands for use herein include compounds (L1) to (L10) listed above.

Preferred bidentate nitrogen ligands for use herein include 4,4'-bipyridine (L1), 1,4-bis(4-pyridyl)benzene (L2), 4,4'-(2,5-dimethyl-1,4-phenylene)dipyridine (L3), 1,4-bis(4-pyridyl)biphenyl (L4) and 1,2-di(pyridine-4-yl)-ethene (L5).

Especially preferred bidentate nitrogen ligands for use herein include 4,4'-bipyridine (L1), 1,4-bis(4-pyridyl)benzene (L2), 4,4'-(2,5-dimethyl-1,4-phenylene)dipyridine (L3) and 1,4-bis(4-pyridyl)biphenyl (L4).

Most preferably the bidentate nitrogen ligand is 4,4'-bipyridine (L1) or 1,4-bis(4-pyridyl)biphenyl (L4).

In some preferred embodiments the metal-organic material comprises an organic multidentate ligand having at least one donor nitrogen atom and one or more carboxylic acid residues. Preferred compounds of this type include at least one nitrogen containing aromatic ring. Such compounds may be referred to herein as nitrogen-carboxylate ligands.

Other suitable compounds of this type include those based on other nitrogen containing aromatic heterocycles, which may contain one or more nitrogen atoms and optionally one or more further heteroatoms, for example, imidazole, pyrimidine, pyrrole, pyrazole, isoxazole and oxazole. Also suitable are compounds based on bicyclic aromatic heterocycles, for example indole, purine, isoindole, pteridine, quinoline, benzotriazole and isoquinoline.

Suitable nitrogen-carboxylate ligands include compounds of formula L69 to L128:

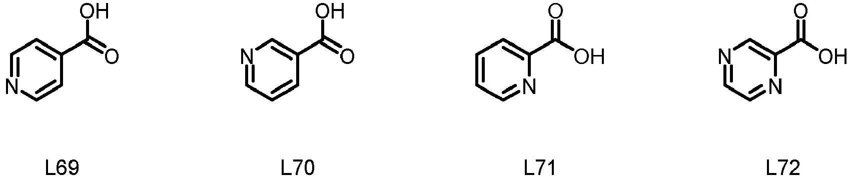

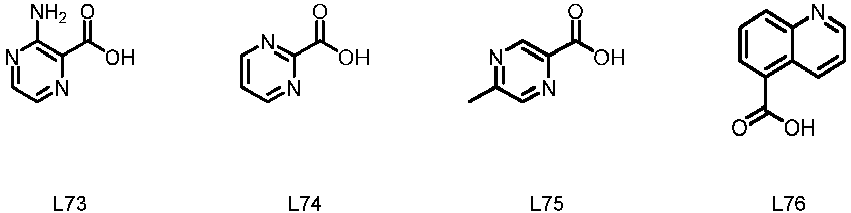

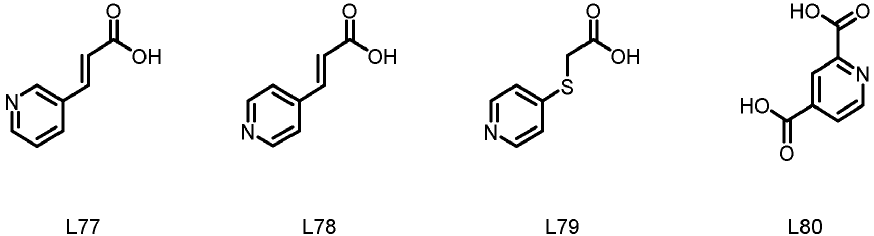

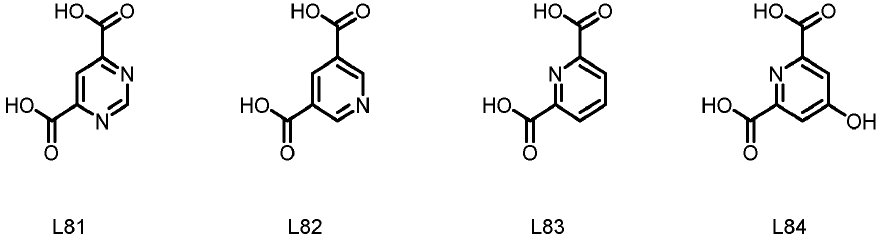

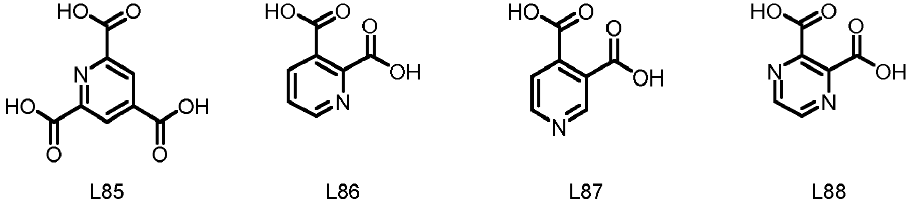

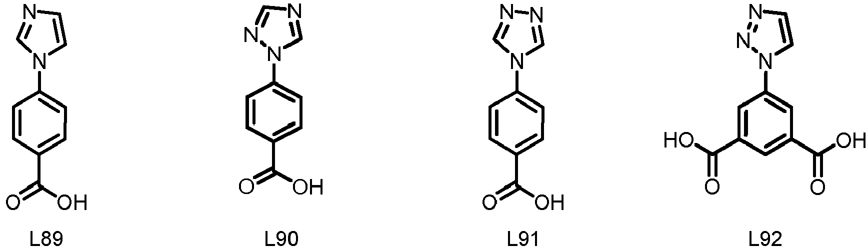

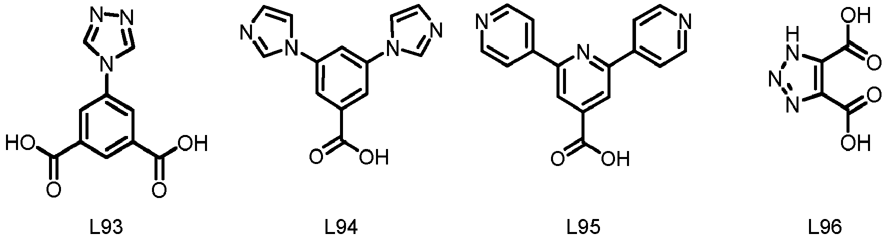

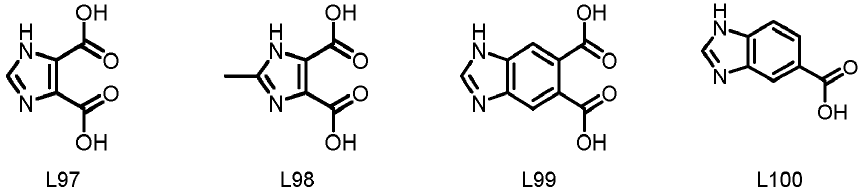

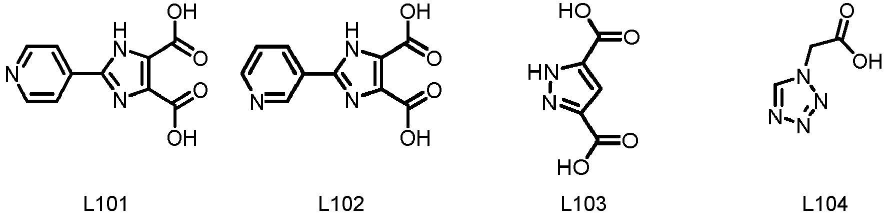

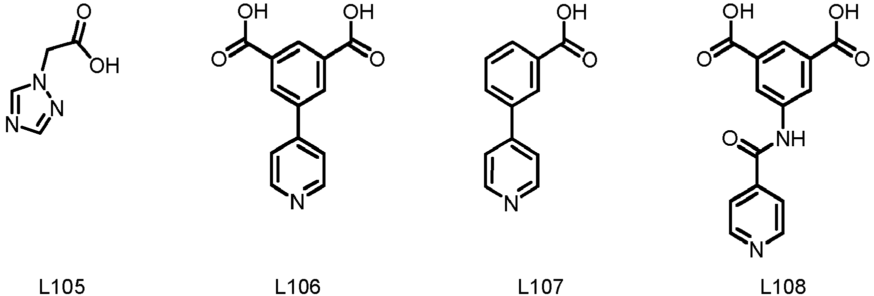

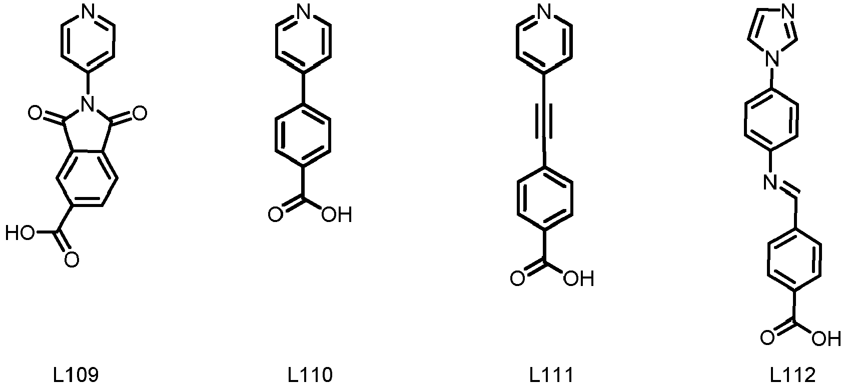

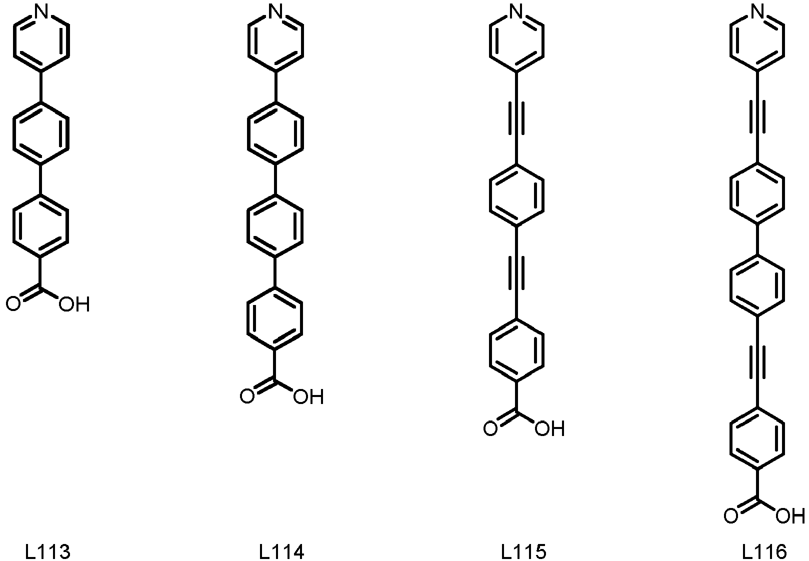

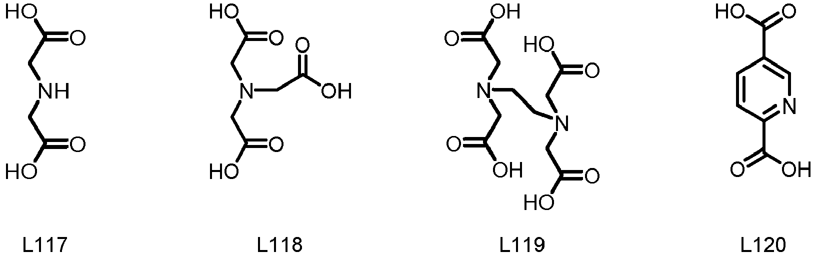

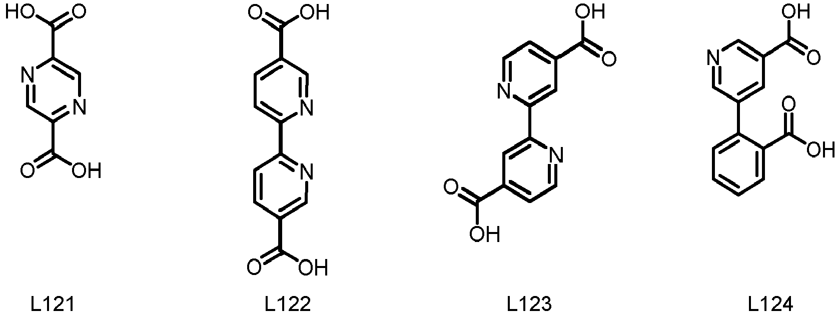

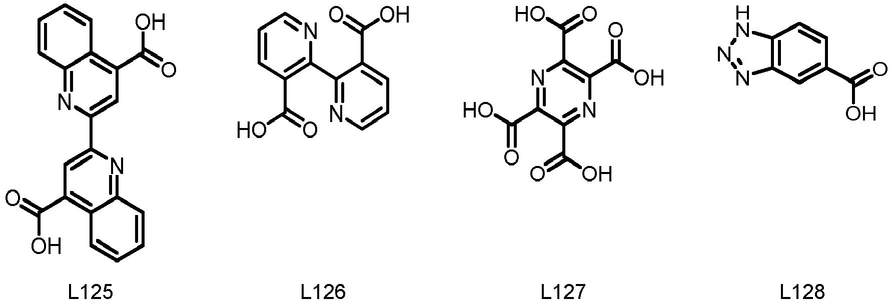

Preferred ligands of this type include benzotriazole-5-carboxylic acid (L128) and 2,4-pyridinedicarboxylic acid (L80).

In some preferred embodiments the metal-organic material comprises an organic multidentate ligand having at least two carboxylic acid residues. These compounds may be referred to herein as polycarboxylate ligands.

Suitable polycarboxylate ligands include compounds of formula L129 to L198:

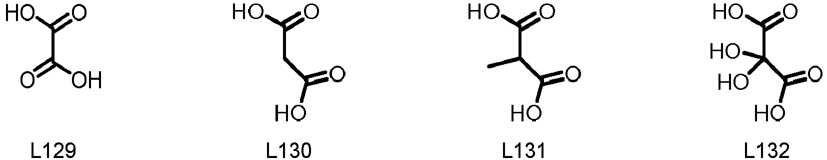

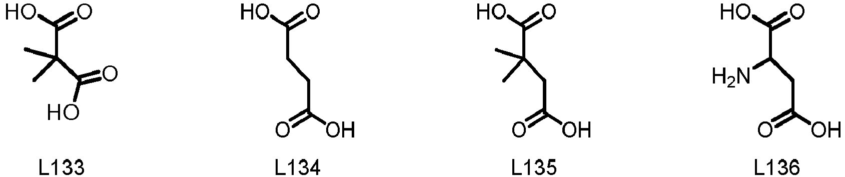

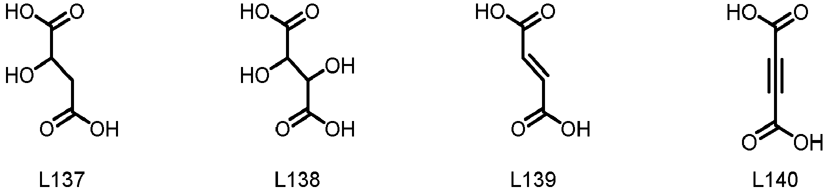

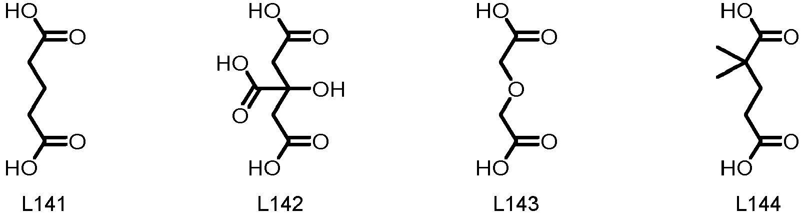

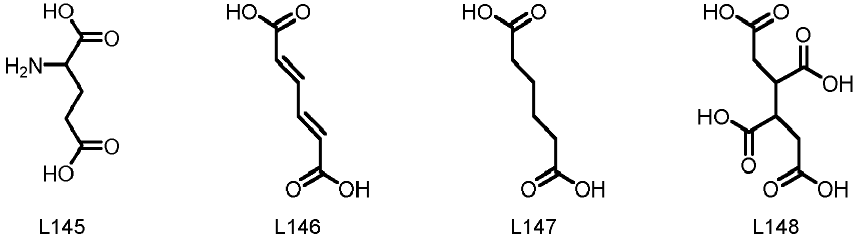

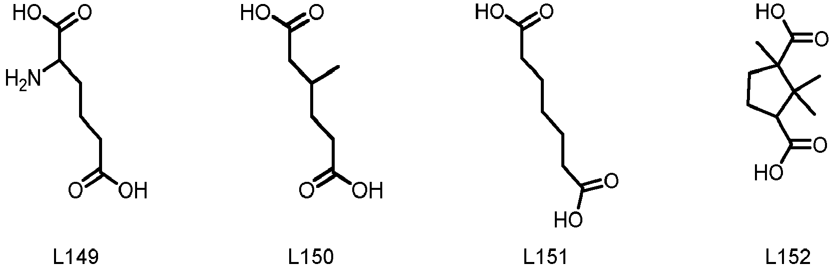

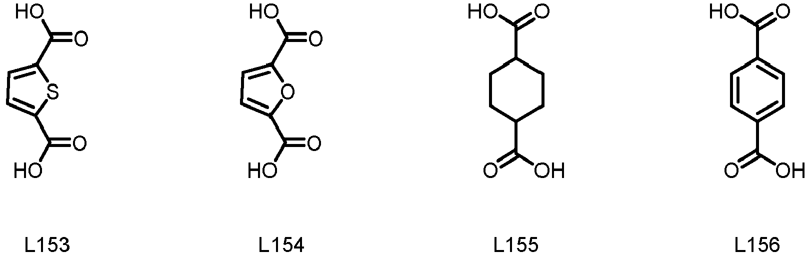

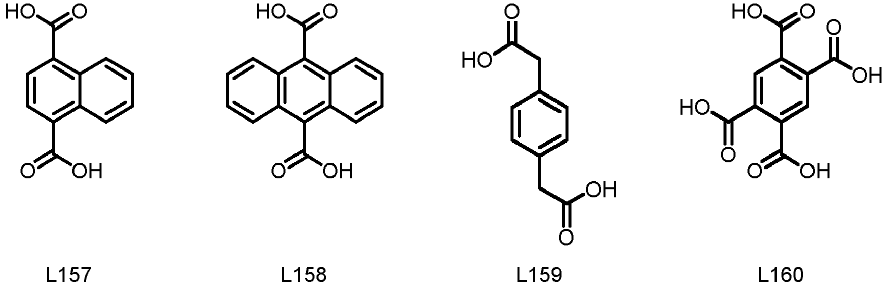

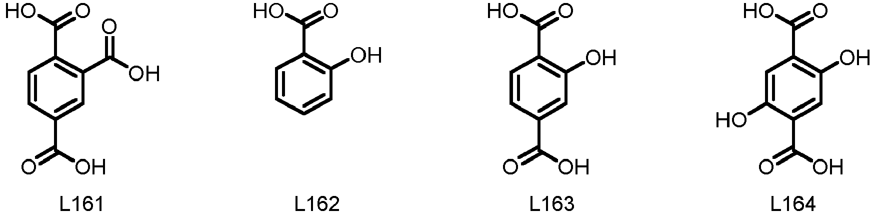

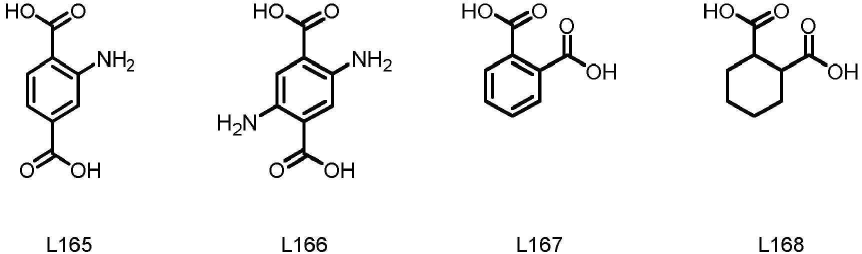

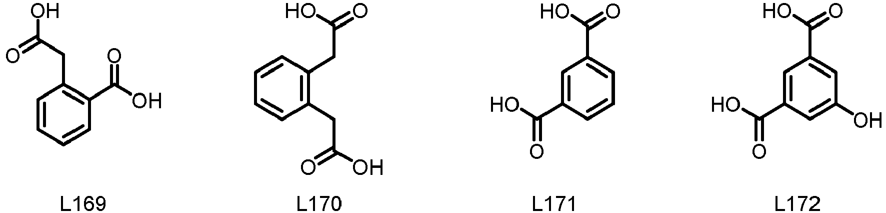

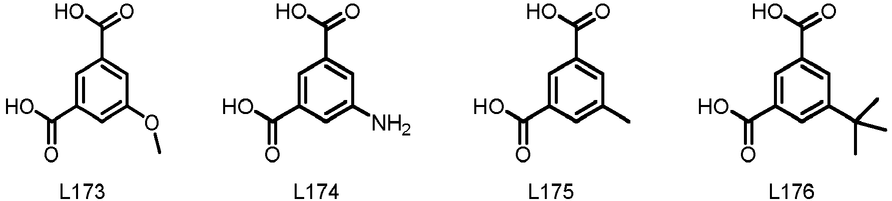

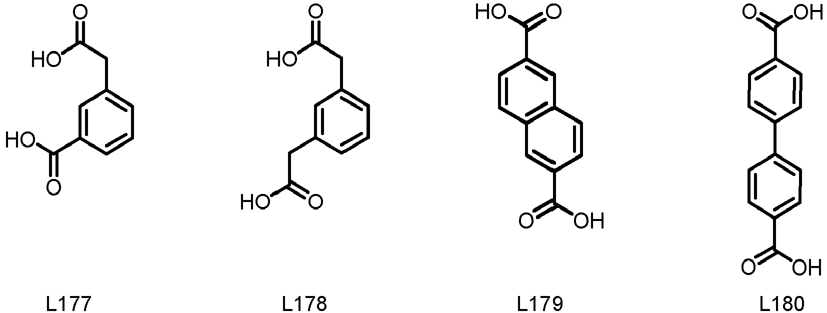

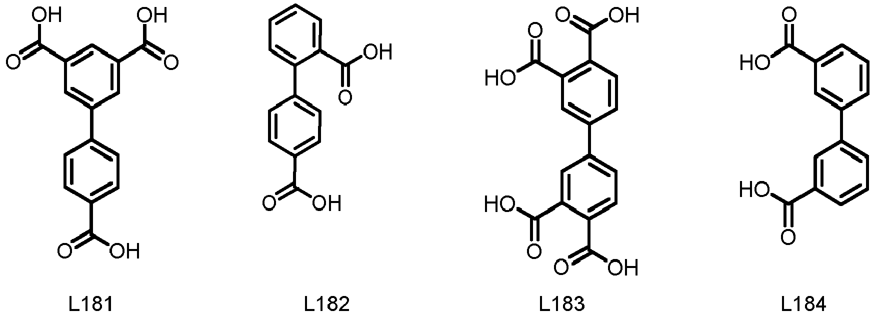

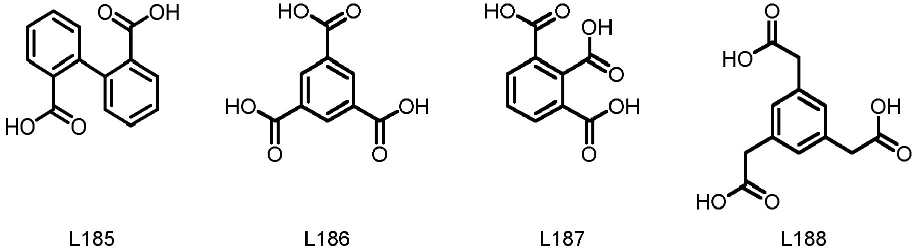

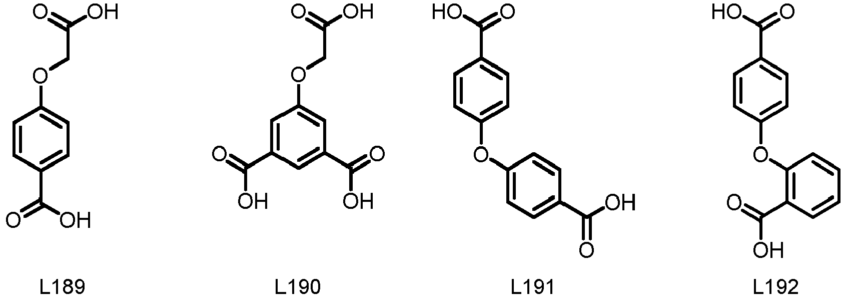

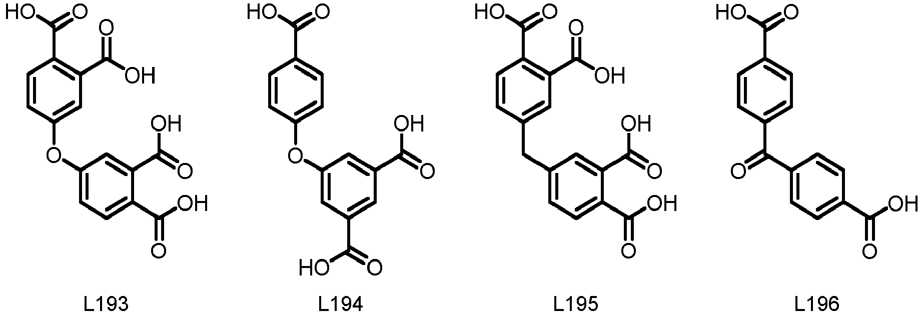

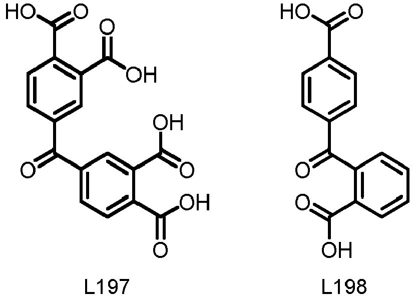

Preferred ligands of this type include glutaric acid (L141) and benzene-1,4-dicarboxylic acid (L156).

Thus the ligands of the metal-organic material are suitably selected from bidentate nitrogen ligands, nitrogen-carboxylate ligands and polycarboxylate ligands.

Preferred bidentate nitrogen ligands are selected from compounds L1 to L68 and especially compounds L1 to L5.

Preferred nitrogen-carboxylate ligands are selected from the compounds having the structures L69 to L128, and especially benzotriazole-5-carboxylic acid (L128) and 2,4-pyridinedicarboxylic acid (L80).

Preferred polycarboxylate ligands are selected from the compounds having the structures L129 to L198 and especially glutaric acid (L141) and benzene-1,4-dicarboxylic acid (L156).

Preferably the metal-organic material used in the present invention include one or more ligands selected from 4,4'-bipyridine (L1), 1,2-di(pyridine-4-yl)-ethene (L5), glutaric acid (L141), benzotriazole-5-carboxylic acid (L128), 2,4-pyridinedicarboxylic acid (L80) and benzene-1,4-dicarboxylic acid (L156).

The metal-organic material suitably comprises metal species and ligands. It may further comprise one or more anions.

Thus in some embodiments the metal-organic material comprises metal species, ligands and anions.

The anions may be coordinated to the metal species (as ligands) or may be incorporated elsewhere in the lattice.

Any suitable anions may be included. Suitable anions will be known to the person skilled in the art and include, for example, hydroxide, halide, carboxylate (including dicarboxylate), nitrate, nitrite, sulfate, sulfite, phosphate, phosphite, borate, oxide, fluro oxyanion, triflate, complex oxyanion, chlorate, bromate, iodate, nitride, tetrafluoroborate, hexafluorophosphate, cyanate and isocyanate.

Suitably the anion is selected from tetrafluoroborate (BF₄⁻), nitrate (NO₃⁻), triflate (CF₃SO₃⁻) and glutarate (⁻OOC(CH₂)₃COO⁻).

The metal-organic material may optionally comprise in one of its structural forms one or more solvent moieties. The solvent moiety may be water, an alcohol or other small organic molecule, for example a hydrocarbon compound, an oxygenated hydrocarbon or a halogenated carbon.

Preferred solvent moieties include water, methanol, ethanol and *α*,*α*,*α*-trifluorotoluene.

Suitably the solvent species may form a coordination bond such as a coordinate covalent bond with the metal species or may be incorporated elsewhere in the lattice.

It will be appreciated by the skilled person that solvent molecules may be present in the crystal structure of the metal-organic material as a result of its preparation process. However the active material used to capture water preferably does not contain any solvent molecules within its crystal structure.

The metal-organic material may be a porous metal-organic framework material comprising pores which have a hydrophobic pore window and a hydrophilic internal pore surface, the hydrophilic internal pore surface being able to capture water, suitably from air.

Hydrophobic atoms have absolute value of δ charge close to 0, while hydrophilic atoms have large absolute value of δ charge. Examples of hydrophobic atoms are H and C atoms in aliphatic or aromatic hydrocarbons. Examples of hydrophilic moieties are -OH, -NH₂ groups.

Pore shapes of porous materials are generally complex and cannot be fitted to simple geometric shapes (e.g. cube, sphere). One of the possible approximations to describe the pore shapes is to use sizes of the spheres that could be inscribed into the pores.

The porous metal-organic framework materials suitable for use herein are preferably microporous materials. Microporous materials have pore diameters of less than 2 nm. Preferably the porous metal-organic framework materials have a pore diameter of less than 10 Å, more preferably less than 8 Å, for example less than 7.5 Å.

The porous metal-organic framework materials for use herein suitably comprise metal species and ligands as previously described.

In preferred embodiments the metal-organic material comprises a metal species selected from copper, cobalt, nickel, iron, zinc, cadmium, zirconium, magnesium, calcium and aluminium, a ligand selected from compounds L1 to L5, L80, L128, L141 and L156 and an anion selected from BF₄⁻, NO₃⁻, CF₃SO₃⁻ and glutarate.

In some embodiments the metal-organic material comprises a metal species selected from copper, cobalt and nickel and a bidentate nitrogen ligand selected from compounds L1 to L4. In some embodiments metal-organic material comprises a metal species selected from copper and cobalt and one or more ligands selected from 4,4'-bipyridine (L1), 1,2-di(pyridine-4-yl)-ethene (L5), glutaric acid (L141), benzotriazole-5-carboxylic acid (L128) and 2,4-pyridinedicarboxylic acid (L80).

In some embodiments, the metal-organic material has the formula Mₓ(A)_{y}(L¹)_{z}, wherein M is a metal species as described above and wherein L¹ is a ligand as defined above; A is an anion as defined above or an anionic form of ligands L69 to L128 or L129 to L198; and wherein x is an integer from 1 to 3, y is an integer from 1 to 3 and z is an integer from 1 to 3. Suitably L¹ is selected from L1 to L5, L80, L128, L141 and L156. Suitably A is selected from BF₄⁻, NO₃⁻, CF₃SO₃⁻ and glutarate. Suitably M is selected from copper or cobalt. Suitably the metal-organic material has the formula Cu₂(A)₂(L¹).

In one especially preferred embodiment the metal-organic material comprises Cu²⁺, 4,4'-bipyridine (L1) and glutarate. Water may be present in some crystal forms. This compound may be referred to herein as [Cu₂(glutarate)₂(4,4'-bipyridine)] or ROS-037.

Methods of preparing this material are described in Examples 1 to 4. Its crystal structure is shown in Example 1 and its properties are described in Examples 1 and 6.

In some embodiments the method and device of the present invention may involve the use of two or more sorbent materials. In such embodiments any reference to the sorbent material includes mixtures.

Step (b) of the method of the first aspect involves contacting the sorbent material with the liquid composition comprising water.

Suitably the sorbent material is directly contacted with the liquid composition comprising water.

The liquid composition comprising water may be any body of water. The liquid composition comprising water may be still or standing water or may be movable, for example flowing water.

The liquid composition comprising water may be retained in a container. Thus the liquid composition comprising water may be a sample taken from a source and having a fixed volume.

The liquid composition comprising water may be a naturally occurring body of water. For example the liquid composition comprising water may be ocean water, sea water, lake water, pond water, river water or stream water. The liquid composition comprising water may comprise canal water or reservoir water.

In step (b) the sorbent material is contacted with the liquid composition comprising water.

During contact of the sorbent material with the liquid composition comprising water, the sorbent material may be stationary or moving and the liquid composition comprising water may be stationary or moving.

Thus step (b) may involve holding the sorbent material in still water.

Step (b) may involve moving the sorbent material through still water.

Step (b) may involve holding the sorbent material in moving water.

Step (b) may involve moving the sorbent material through moving water.

Suitably contact between the sorbent material and the liquid composition comprising water is sufficient to allow adsorption or absorption of water from the liquid composition comprising water.

The sorbent material is suitably provided in a form that facilitates contact with the liquid composition comprising water.

The sorbent material may be provided as a powder. Suitably when contacted with the liquid composition comprising water the sorbent powder may be wetted. Suitably the sorbent powder may be dispersed into the liquid composition comprising water.

The sorbent material may be provided in the form of shaped bodies, for example in the form of pellets, granules or tablets. Suitably the sorbent pellets, granules or tablets may be placed in the liquid composition comprising water.

The sorbent material may be provided as a sheet material.

The sorbent material may be provided as part of a membrane. In such embodiments the liquid composition comprising water may flow across or through the sorbent membrane.

Preferably the sorbent material is provided within or carried on a support. Suitably the support may help to maintain the form of the sorbent material under normal conditions of use.

In some embodiments the sorbent material is contacted with flowing or running water. The sorbent material may be positioned so that the liquid composition comprising water falls onto the sorbent material. For example the sorbent material may be placed underneath a stream of flowing water.

The sorbent material may be positioned so that the liquid composition comprising water flows through or over the sorbent material. In some embodiments the liquid composition comprising water may flow through a channel and the sorbent material may be fixed along or within the channel.

In some preferred embodiments the sorbent material is movable. In such embodiments the sorbent material may be moved through or within the liquid composition comprising water.

In some embodiments the sorbent material may be positioned on a moving body, for example on the outside of a ship or other vessel. Suitably the sorbent material is moved through the liquid composition comprising water (for example sea water) as the ship travels through the water.

In some preferred embodiments the sorbent material is contacted with a liquid composition comprising water housed within a container. The container may comprise means for delivering liquid to the container.

Suitably in step (b) the sorbent material is at least partially immersed in the liquid composition comprising water.

In some embodiments the sorbent material may be fully immersed in the liquid composition comprising water.

Suitably the sorbent material has a water sorption capacity of at least 1 wt%, preferably at least 3 wt%, preferably at least 5 wt%, for example at least 6 wt% or at least 7 wt%. In some embodiments the sorbent material may have a water sorption capacity of greater than 8 wt%, for example at least 9 wt% or at least 10 wt%. By water sorption capacity we mean to refer to the weight of water a sorbent material is able to adsorb and/or absorb as a fraction of its own weight.

An intrinsic Dynamic Vapor Sorption (DVS) instrument is used by those skilled in the art to generate water sorption data (reported as %wt.) on porous and non-porous materials.

Step (c) of the method of the first aspect of the present invention involves separating the sorbent material and the liquid composition comprising water. Suitably following step (c) the liquid composition comprising water is not in contact with the sorbent material.

In embodiments in which the sorbent material is at least partially immersed or fully immersed in the liquid composition comprising water, step (c) may involve moving the sorbent material so that it is no longer immersed. For example the sorbent material may be lifted from or slid out of the liquid composition comprising water. In some preferred embodiments the sorbent material may be rotated to remove it from the liquid composition comprising water.

In embodiments in which the liquid composition comprising water is housed in a container, the container may be moved in step (c) such that the sorbent material is no longer in contact with the liquid composition comprising water.

In embodiments in which the sorbent material is contacted with flowing liquid, step (c) may involve stopping the flow of the liquid composition comprising water from contacting the sorbent material.

In embodiments wherein the sorbent material is carried by on a ship, for example, step (c) may involve lifting the sorbent material out of the liquid composition comprising water.

Step (d) of the method of the first aspect involves desorbing water from the sorbent material.

Suitably desorption occurs when the sorbent material is subjected to a stimulus, for example a change in humidity or a change in temperature. In some embodiments this stimulus is provided by separating the sorbent material from the liquid composition comprising water.

Desorption may occur on application of external energy. In some preferred embodiments desorption occurs upon a reduction in humidity and/or an increase in temperature.

Step (d) may involve contacting the sorbent material with a gas stream, for example an air stream. In some preferred embodiments in step (d) air is allowed to flow over or through the sorbent material or a stream of air is directed over or through the sorbent material.

In preferred embodiments in step (d) the sorbent material is contacted with warm air and/or dry air.

In some embodiments, step (d) involves contacting the sorbent material with warm air having a temperature of from 2°C to 140°C, preferably from 20°C to 100°C, for example from 25°C to 90°C or from 30°C to 80°C. Suitably the warm air has a temperature of from 35°C to 75°C, for example of from 40°C to 60°C.

In preferred embodiments in step (d) the sorbent material is contacted with dry air, suitably having a humidity of less than 50 grains, preferably less than 30 grains, more preferably less than 20 grains. The grain unit will be known to the skilled person and is an absolute measure of how much water is present in 1lb of air under any temperature condition.

Suitably during step (d) water molecules are desorbed as gaseous water molecules or water vapour. The water vapour is suitably condensed to provide liquid water.

Suitably the sorbent material desorbs at least 120 cm³ water vapour/cm³ material when subjected to a stimulus, for example a change in temperature or change in humidity. Suitably the sorbent material desorbs at least 130 cm³ water vapour/cm³ material, for example at least 140 cm³ water vapour/cm³ material when subjected to a stimulus. Suitably the sorbent material desorbs at least 150 cm³ water vapour/cm³ material when subjected to a stimulus.

Suitably the sorbent material of the present invention desorbs at least 20% of the sorbed water within 5 minutes under ambient conditions of temperature and humidity (27°C, 1 atm). Suitably the sorbent material desorbs at least 30%, for example at least 40%, of the sorbed water within 10 minutes under ambient conditions of temperature and humidity. Suitably the sorbent material desorbs at least 50% of the sorbed water within 1 hour under ambient conditions of temperature of humidity.

The present invention suitably provides highly pure water vapour from the liquid composition comprising water without having to input the high energy necessary to achieve evaporation. Thus the present invention offers significant advantages over the methods of the prior art that involve evaporation as such methods are energy intensive and costly.

In preferred embodiments sorption and desorption of water is reversible.

In especially preferred embodiments sorption and desorption are reversible over several cycles.

The water delivered from the sorbent material is suitably ultra-high purity water. This water vapour is suitably condensed to provide ultra-high purity liquid water.

By ultra-high purity water we mean to refer to water without any contaminant species, such as organic and inorganic compounds and dissolved gases. Suitably there will be less than 100 ppm of contaminant species, suitably less than 50 ppm, for example less than 20 ppm. In some embodiments water comprising less than 10 ppm or less than 5ppm contaminant species may be provided.

In step (d), the desorbed water may be provided as a vapour. Suitably this water vapour is condensed to provide liquid water. The water vapour may condense without an external stimulus due to the temperature and/or humidity conditions of the environment present.

In some embodiments the method of the first aspect comprises a further step (e) of condensing the desorbed water vapour to provide liquid water. Suitably step (e) is performed after step (d).

Thus the present invention may provide a method of obtaining water from a liquid composition comprising water, the method comprising:
(a) providing a sorbent material;
(b) contacting the sorbent material with the liquid composition comprising water;
(c) separating the sorbent material and the liquid composition comprising water;
(d) desorbing water from the sorbent material as a vapour; and
(e) condensing the desorbed water vapour to provide liquid water;
wherein the sorbent material is a metal-organic material.

Methods of condensing the water vapour to liquid water will be known by the person skilled in the art. For example the water vapour may be cooled or pressurised. Cooling may be active or passive.

The method of the first aspect of the present invention may be carried out using the device of the second aspect.

The device of the second aspect of the present invention comprises a sorbent material movable between a first position and a second position.

In embodiments in which the method of the first aspect is carried out using a device of the second aspect, step (b) suitably involves arranging the sorbent material in the first position and step (c) suitably involves moving the sorbent material to the second position.

In preferred embodiments the sorbent material is a metal-organic material as previously described herein.

In especially preferred embodiments the sorbent material comprises [Cu₂(glutarate)₂(4,4'-bipyridine)] (ROS-037) as previously described herein.

Suitably the sorbent material is mounted on or within a support.

The material is suitably arranged on the support in a configuration to maximise adsorption and/or absorption.

The metal-organic material may be arranged on the surface of the support or incorporated within the body of the support.

The support may be selected from any suitable material. Such materials include polymeric, plastic, metal, resin, ceramic and/or composite materials. A person skilled in the art will be familiar with these types of material and will be able to select the most appropriate support for the device and/or sorbent material.

In some embodiments the support comprises a polymer material. In one embodiment the support comprises an acrylic polymer. Suitable acrylic polymers include commercially available HYCAR® 26410 from the Lubrizol Corporation.

In one embodiment the support comprises a cellulosic material, for example paper. The support may comprise a composite material of paper and another polymer.

In some preferred embodiments the sorbent material is arranged on a planar support structure, for example in a corrugated manner. The planar support structure carrying the sorbent material may be packed in layers to form a solid body. For example, the planar support may be rolled around a central axis or core to form a disc or cylindrical body.

In an alternative embodiment the sorbent material may be retained within a shell. For example, discrete portions of sorbent material may be retained in a hollow shell to provide a body of sorbent material. The portions may be shaped, for example in spherical form, and packed into multiple layers. Such spheres may be hollow or solid. At least one side or face of the outer shell is water permeable.

In one embodiment a solid annular outer shell is provided sealed at each end by circular meshes to form a disc or cylindrical body. Suitably within the shell portions of sorbent material are provided. These are suitably shaped and packed to present maximum surface area to liquid passing through the body of sorbent material.

The sorbent material is movable between a first position and a second position. Suitably the sorbent material is adapted to move from the first position to the second position and from the second position to the first position.

In some preferred embodiments the sorbent material is adapted to rotate between the first position and the second position.

In some embodiments the sorbent material is adapted to vacate the first position to enter the second position.

In some preferred embodiments the sorbent material is arranged such that a portion of the sorbent material is in the first position and a portion of the sorbent material is in the second position.

Suitably the device comprises means for moving the sorbent material between the first position and the second position.

The device may suitably comprise a power supply, for example a battery. In some preferred embodiments the device comprises a motor configured to move the sorbent material between the first position and the second position.

In some embodiments the device comprises a lever configured to move the sorbent material between the first position and the second position. In one embodiment the lever is configured to lift the sorbent material from the first position to the second position and lower the sorbent material from the second position to the first position.

In some embodiments the device comprises a pulley system adapted to move the sorbent material between the first position and the second position. Suitably the device may comprise more than one pulley, for example the device may comprise two or more pulleys. Suitably the sorbent material may be provided on or within a belt which may loop between the first and second position.

In some embodiments the sorbent material may be rotatable between the first position and the second position.

In a preferred embodiment in which the sorbent material is provided in a disc-shaped or annular body, the device may be configured to rotate around the central axis of this body. Thus a portion of the sorbent material is in the first position and a portion of the sorbent material is in the second position at all times.

In the first position the sorbent material is contactable with the liquid composition comprising water.

In some preferred embodiments the device comprises a reservoir for the liquid composition comprising water. The reservoir may be configured to hold a liquid composition comprising water. Alternatively the device may comprise a channel which allows a liquid composition comprising water to flow through it.

In the second position the sorbent material is located within a conduit.

In some preferred embodiments in which the sorbent material is adapted to rotate between the first position and the second position, a part of the sorbent material will be located within the conduit and a part of the material will be located outside of the conduit.

In embodiments wherein the device is configured such that the sorbent material vacates the first position to enter the second position, in the first position the sorbent material will be located outside of the conduit and in the second position the sorbent material will be located inside the conduit.

Suitably in the second position the sorbent material is arranged within the conduit to allow a gas, for example air, to flow over or through the sorbent material.

In preferred embodiments the device is configured to facilitate desorption of water at the second position.

In some embodiments the shape of the conduit may be such that it allows a flow of air through or over the sorbent material. For example the device may be carried by a moving vehicle, for example, a ship. As the vehicle and thus the device moves, air flows through the conduit.

In preferred embodiments the device further comprises a desorption means.

The desorption means may comprise any means that promotes desorption of water from the device when the sorbent material is in the second position.

In some embodiments the desorption means may comprise means for moving the conduit through the air.

Preferably the desorption means comprises means for directing the flow of air through or over the sorbent material.

In preferred embodiments the desorption means comprises means for directing air through the conduit such that it passes through or over the sorbent material when it is in the second position. Suitably the flow of air into the conduit may be carefully controlled.

Suitably the conduit comprises an inlet and an outlet to direct the flow of air. Suitably the desorption means comprises means for directing warm air and/or dry air through the conduit.

In some embodiments the device comprises means for directing warm air through the conduit such that it passes through or over the sorbent material.

For example the desorption means may comprise a heater for heating air.

In some embodiments the device comprises means for directing dry air through the conduit such that it passes through or over the sorbent material. For example air may be first passed through a desiccant before contacting the sorbent material.

In some embodiments the device comprises means for directly heating the sorbent material. In preferred embodiments the sorbent material is not heated.

The desorbed water may be released as water vapour.

In some embodiments the device may further comprise means for condensing the desorbed water vapour to provide liquid water.

In some embodiments the shape of the conduit may facilitate condensation.

The conduit may include a surface to induce condensation. In some embodiments a surface of the conduit may be cooled.

Suitably the device further comprises a receptacle for collecting desorbed water or means for directing desorbed water into a water delivery system.

The present invention offers significant advantages over methods and devices of the prior art.

The invention can be used on a small scale or a larger scale. This offers a significant advantage over desalination processes and devices of the prior art which must be carried out on a very large scale for efficiency.

As previously highlighted the present invention offers enormous energy savings compared with conventional methods relying on evaporation.

The device of the present invention may be powered electrically. It may be powered using renewable resources, for example solar power.

The device and method of the present invention can find utility in a wide variety of locations on a range of scales.

The device and method of the present invention may be used on a ship, for example, to obtain water from seawater. The invention may be used in an industrial capacity, for example at waste-water treatment sites. It can be used on a small scale, for example in remote locations to provide drinking water to isolated communities. The invention can be used to remove water from sea water in general, to remove water from effluent waste from farms or homes, to remove water from milk prior to transportation, to remove water from commercial juice manufacturing, to remove water from industrial waste streams (paper industry etc), to remove water from radioactive waste, and in many other applications. Thus it is highly versatile and can be used at different scales in many different environments.

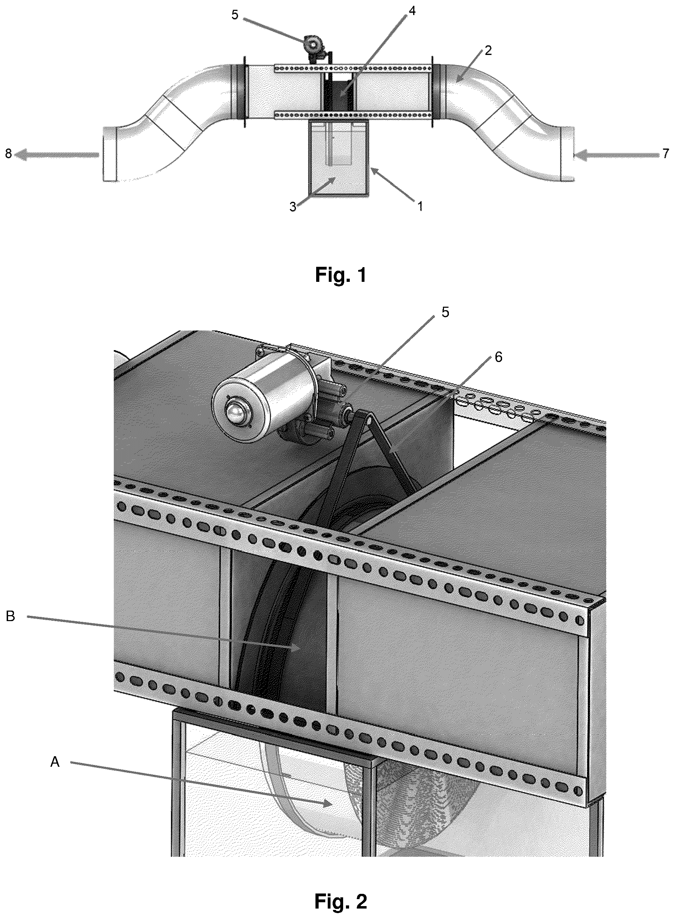

The invention will now be further described with reference to the accompanying drawings, in which Figure 1 shows a cross sectional view of a device according to the present invention; and Figure 2 shows a detailed view of the circular rotor.

The device comprises a reservoir (1) and a conduit (2). A liquid composition comprising water (3) is housed within the reservoir (1). A disc of sorbent material (4) is suspended from a motor (5) by a belt (6) which allows the sorbent material to rotate through 360°. The disc of sorbent material cycles between a first position (A) wherein the sorbent material is immersed in the liquid composition comprising water in the reservoir (1) and a second position (B) within the conduit (2). In the second position the sorbent material is exposed to a continuous flow of dry air which passes through the conduit via an inlet (7). Water vapour exits through an outlet (8) and is condensed.

The invention will now be further described with reference to the following non-limiting examples.

In the following examples, powder X-ray diffraction (PXRD) measurements were taken using microcrystalline samples using a PANalytical Empyrean™ diffractometer equipped with a PIXcel3D detector. The variable temperature powder X-ray diffraction (VT-PXRD) measurements were collected using a Panalytical X'Pert diffractometer.

Single crystal X-ray diffraction (SCXRD) measurements were also collected on a number of compounds. The data was collected using a Bruker D8 Quest diffractometer.

Thermogravimetric analysis (TGA) was carried out under nitrogen using the instrument TA Q50 V20.13 Build 39 and data was collected in the high resolution dynamic mode.

Fourier Transform Infrared (FT-IR) spectra were measured on a Perkin Elmer spectrum 200 spectrometer.

Low-pressure N₂ adsorption measurements were performed on approximately 200 mg of sample using ultra-high purity grade N₂. The measurements were collected using a Micrometrics TriStar II PLUS and a Micrometrics 3 Flex was used to analyse the surface area and pore size.

Vacuum dynamic vapour sorption (DVS) studies made use of a Surface Measurement Systems DVS Vacuum, which gravimetrically measures the uptake and loss of vapour. The DVS methods were used for the determination of water vapour sorption isotherms using approximately 15 to 30 mg of sample. Pure water was used as the adsorbate for these measurements and temperature was maintained by enclosing the system in a temperature-controlled incubator.

### Example 1: Synthesis and Properties of [Cu₂(glutarate)₂(4,4'-bipyridine)] (ROS-037)

### Synthesis of [Cu₂(glutarate)₂(4,4'-bipyridine)]

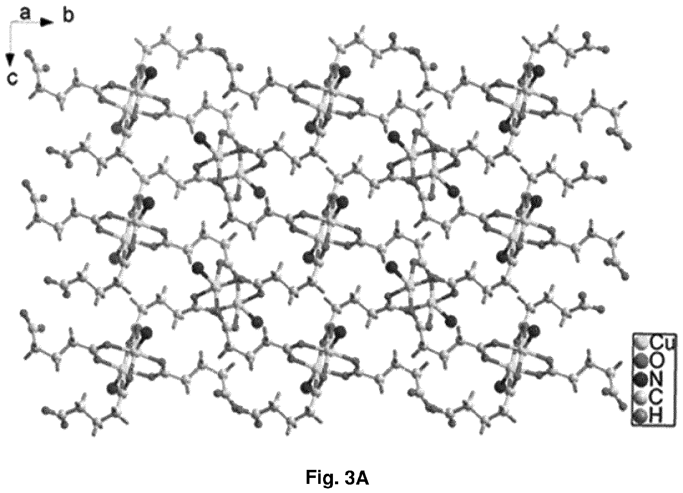

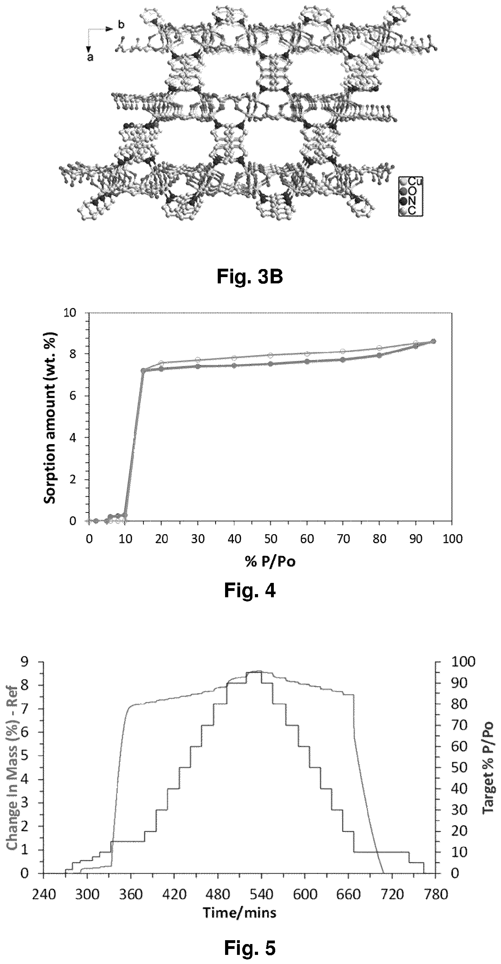

Cu(NO₃)·3H₂O (242 mg, 1 mmol), glutaric acid (132.1 mg, 1 mmol), and 4,4'-bipyridine (78 mg, 0.5 mmol) were mixed in water (100 ml). NaOH was added dropwise with swirling to the solution to prevent precipitation. The blue solution was placed in an oven preheated to 85°C. Green powder was obtained after 24 to 48 hours. This compound may also be referred to as ROS037. Figures 3A and 3B shows the crystallographic structure of this compound.

### Water vapour sorption studies of [Cu₂(glutarate)₂(4,4'-bipyridine)]

Water vapour sorption studies for [Cu₂(glutarate)₂(4,4'-bipyridine)] were performed at 25°C, shown in Figure 4. The sample shows a very narrow hysteresis gap, indicating that water desorption is not restricted.

### Kinetic studies of [Cu₂(glutarate)₂(4,4'-bipyridine)]

Water sorption and desorption kinetics for [Cu₂(glutarate)₂(4,4'-bipyridine)] were obtained at 25°C, demonstrated in Figure 5. The kinetics data in Figure 5 show that all steps reach equilibrium over a range of temperatures. The removal of water from the structure does not require any additional heating or vacuum, as evidenced by the mass returning to its original value at 0% relative humidity.

### Reversibility studies of [Cu₂(glutarate)₂(4,4'-bipyridine)]

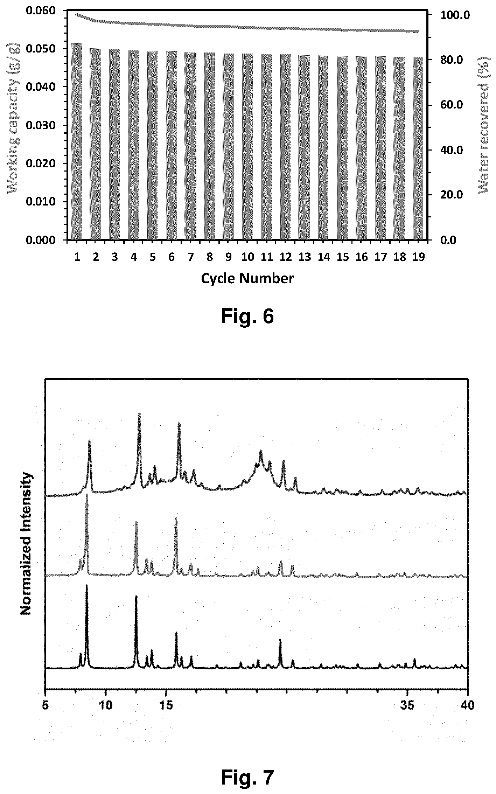

Nineteen cycles of adsorption and desorption at 25°C were performed in total. Reversible switching isotherms are observed and no hysteresis gap is detected, indicating water desorption is not restricted. [Cu₂(glutarate)₂(4,4'-bipyridine)] shows a high working adsorption capacity in the low partial pressure range (≤ 30% P/Po), as demonstrated in Figure 6.

### Example 2: Alternative synthesis of [Cu₂(glutarate)₂(4,4'-bipyridine)]

In a beaker, Cu(OH)₂ (488 mg, 5 mmol) was suspended in 100 mL of water with stirring for 5 minutes. Glutaric acid (1.32 g, 10 mmol) was added and allowed to stir for 5 minutes. The solution became clear and dark blue in colour. 4,4'-bypyridyl (390.5 mg, 2.5 mmol) was added and a green precipitate was formed in 10 minutes. The mixture was filtered and washed with 50 mL of water to obtain the solid product, Yield, 1.332 g, >94%.

Characterisation of the product confirmed this to be identical to the product obtained in Example 1.

### Example 3: Lab-scale synthesis of [Cu₂(glutarate)₂(4,4'-bipyridine)]

ROS-037 was synthesized in lab scale by a modified literature protocol as follows: 350 mL of water was taken in a 500 mL conical flask and glutaric acid (24.3 g, 0.184 mol) was added followed by the addition of NaOH (14.7 g, 0.368 mol) and stirred until a clear solution was obtained. Cu(NO₃)₂·2.5H₂O (42.7 g, 0.184 mol) was added and allowed to stir for 10 minutes. 4,4'-bypyridyl (14.4 g, 0.092 mol) was added and the mixture was allowed to stir for 1 hour at 70°C. Once the reaction was completed, the solution was filtered to obtain the solid product, and further washed with water to remove any traces of unreacted reactants and air dried. Yield, 48 g, > 98%.

Characterisation of the product confirmed this to be identical to the product obtained in Example 1.

### Example 4: Scale-up synthesis of [Cu₂(glutarate)₂(4,4'-bipyridine)]

ROS-037 can be scaled up to mini-plant scale by water slurry method as follows. 3.5 L of water was added to the 5 L reactor and the stirrer was set to 750 rpm. Glutaric acid (243 g, 1.84 mol) was added and allowed to dissolve for 10 minutes. NaOH (147 g, 3.68 mol) was added and the temperature of the reactor was set to 70 °C. (Note: Reaction can be carried out at room temperature also, however more reaction time is required). Once a clear solution was obtained, Cu(NO₃)₂·2.5H₂O (427 g, 1.84 mol) was added and allowed to stir for 15 minutes. 4,4'-bypyridyl (144 g, 0.92 mol) was added and the mixture was allowed to stir for 6 hours. Once the reaction was complete, the solution was filtered to obtain the solid product, which was further washed to remove any traces of NaOH and unreacted reactants and air dried. Yield, 481 g, > 98%.

### Example 5: Loading of [Cu₂(glutarate)₂(4,4'-bipyridine)] (ROS-037) on a paper support

[Cu₂(glutarate)₂(4,4'-bipyridine)] powder was added in a standard cellulose paper making process that anyone skilled in the art could perform. Cellulose fiber was first dispersed in water at approximately 3-5% solids. [Cu₂(glutarate)₂(4,4'-bipyridine)] powder was added to the fiber mixture and agitated in order to disperse. The blend was then diluted to very low solids content (1% or less) to provide an attraction between the fibers and the desiccant powder. The evenly dispersed mixture was drained through a screen. The remaining water was removed from the wet sheet of fibers/powder through vacuum, pressing, and drying. Good adsorption and desorption properties were recorded for the resulting material.

Figure 7 shows the Powder X-ray diffraction spectrum of the paper composite (top line) in comparison with as synthesized powder (middle line) and calculated powder (bottom line).

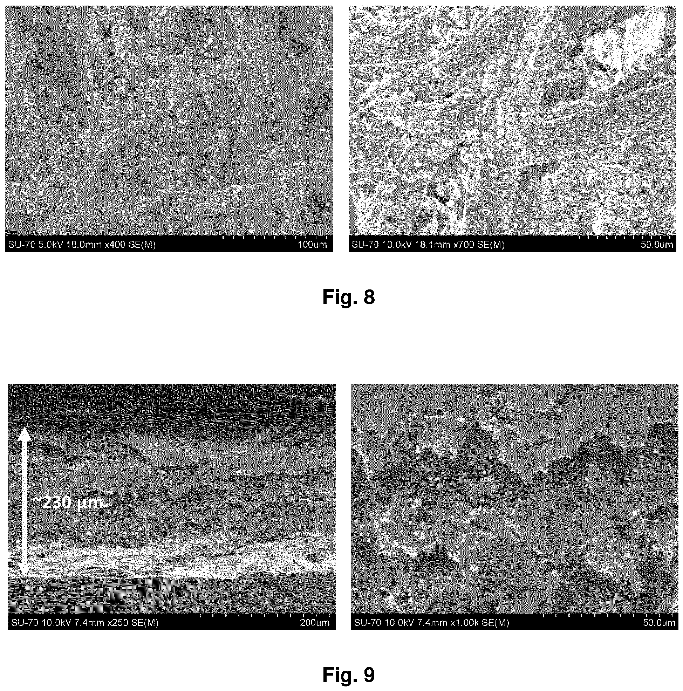

Figures 8 and 9 respectively show flat section and cross section SEM images of the paper composite.

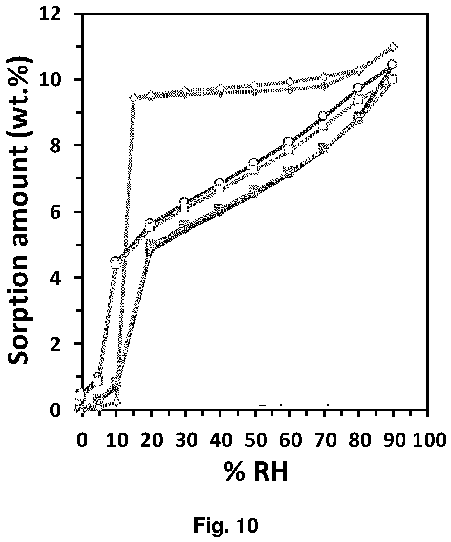

Figure 10 shows experimental isotherms for water vapour sorption at 27 °C on [Cu₂(glutarate)₂(4,4'-bipyridine)] powder and its paper composite, respectively from the top down. In-situ pre-treatment (intrinsic-DVS) before collecting isotherm at 40 °C for 120 min. Isotherm collected at 27 °C (Intrinsic-DVS). dm/dt < 0.01 %/min.

### Example 6: Desalination testing using [Cu₂(glutarate)₂(4,4'-bipyridine)]

[Cu₂(glutarate)₂(4,4'-bipyridine)] samples were placed in an oven for 12 h at 80°C. Afterwards, the container was sealed and kept under nitrogen flow for 2 h. Adsorbent-solution (solution of 30 mL of saline (NaCI) aqueous solution in a concentration range from 0.0 to 111.1 g/L exposed to 1 g/L, 50 g/L or 500 g/L of adsorbent) were studied at 25°C. Suspensions were stirred using a magnetic stirrer for 8 h. The resulting slurry was filtered with a syringe filter (0.22 µm pore size) and the residual saline solution was collected. NaCI concentration in all aqueous solution (before and after soaking [Cu₂(glutarate)₂(4,4'-bipyridine)] at different concentrations) was analysed by using a conductivity meter (model: JENWAY 4510). Measurements were performed three times and the mean was calculated. The concentration of NaCI (g/L) was determined by correlating the conductivity (mS) and a [NaCI] calibration curve. The results indicate that [Cu₂(glutarate)₂(4,4'-bipyridine)] increased NaCI concentration by the expected amount in every experiment showing that the material can adsorb water from concentrated salt solutions.

## Claims

1. A method of obtaining water from a liquid composition comprising water, the method comprising:
(a) providing a sorbent material;
(b) contacting the sorbent material with the liquid composition comprising water;
(c) separating the sorbent material and the liquid composition comprising water; and
(d) desorbing water from the sorbent material;
wherein the sorbent material is a metal-organic material.

2. A device for obtaining water from a liquid composition comprising water, the device comprising:
a sorbent material movable between a first position and a second position;
wherein in the first position the sorbent material is contactable with the liquid composition comprising water and in the second position the sorbent material is located within a conduit.

3. The method according to claim 1 or a device according to claim 2, wherein the sorbent material is a metal-organic material and preferably wherein the metal-organic material comprises metal species and ligands.

4. The method or device as claimed in claim 3 wherein the metal species is selected from copper, cobalt, nickel, iron, zinc, cadmium, zirconium, magnesium, calcium and aluminium.

5. The method or device as claimed in claim 4 wherein the ligands are selected from 4,4'-bipyridine (L1), 1,4-bis(4-pyridyl)benzene (L2), 4,4'-(2,5-dimethyl-1,4-phenylene)dipyridine (L3), 1,4-bis(4-pyridyl)biphenyl (L4), 1,2-di(pyridine-4-yl)-ethene (L5), 2,4-pyridinedicarboxylic acid (L80), benzotriazole-5-carboxylic acid (L128), glutaric acid (L141) and benzene-1,4-dicarboxylic acid (L156), preferably wherein the sorbent material is [Cu₂(glutarate)₂(4,4'-bipyridine)].

6. The method or device as claimed in any preceding claim wherein the liquid composition comprising water is highly salted water and/or waste water or effluent water.

7. The method as claimed in any of claims 1 or 3 to 6 wherein in step (b) the liquid composition comprising water is housed within a container.

8. The method as claimed in any of claims 1 or 3 to 7 wherein in step (c) the sorbent material is rotated to remove it from the liquid composition comprising water.

9. The method according to any of claims 1 or 3 to 10 wherein step (d) involves contacting the sorbent material with warm air and/or dry air, preferably further comprising step (e) of condensing the desorbed water vapour to provide liquid water.

10. The device according to any of claims 2 to 6 wherein the sorbent material is arranged such that a portion of the sorbent material is in the first position and a portion of the sorbent material is in the second position.

11. The device according to any of claims 2 to 6 or 10 wherein the sorbent material is provided in a disc-shaped or annular body, preferably wherein the device is configured to rotate around the central axis of the disc-shaped or annular body.

12. The device according to any of claims 2 to 6, 10 or 11 wherein the conduit comprises an inlet and an outlet to direct the flow of air.

13. The device according to any of claims 2 to 6 or 10 to 12 wherein the device comprises a desorption means.

14. The device according to any of claims 2 to 6 or 10 to 13 further comprising a receptacle for collecting desorbed water or means for directing desorbed water into a water delivery system.

15. The method according to any of claims 1 or 3 to 19 carried out using a device according to any of claims 2 to 6 or 10 to 14.
